Europäisches Patentamt

(19) European Patent Office

Office européen des brevets

(11) EP 0 777 213 A1

(12) **EUROPEAN PATENT APPLICATION**

(43) Date of publication:
04.06.1997 Bulletin 1997/23

(51) Int. Cl.$^6$: **G11B 5/39**

(21) Application number: 96203182.9

(22) Date of filing: 14.11.1996

(84) Designated Contracting States:
DE FR GB

(30) Priority: 29.11.1995 US 564751

(71) Applicant: **EASTMAN KODAK COMPANY**
**Rochester, New York 14650 (US)**

(72) Inventor: **Smith, Neil**
**Rochester, New York 14650-2201 (US)**

(74) Representative: **Blickle, K. Werner, Dipl.-Ing. et al**
**KODAK AKTIENGESELLSCHAFT**
**Patentabteilung**
**70323 Stuttgart (DE)**

(54) **Flux-guided paired magnetoresistive head**

(57) A magnetoresistive head assembly includes:

a paired magnetoresistive head including first (30) and second (32) magnetoresistive elements having a first (34) electrically insulating spacer located between the elements;

a magnetic flux guide (38) of a high magnetically permeable material, the magnetic flux guide having a first edge located proximate to a magnetic medium (15) and a second edge spaced from the first edge and the magnetic medium; and

a second electrically insulating spacer (36) located between the second edge of the flux guide and the paired magnetoresistive head;

wherein the paired magnetoresistive head is spaced from the magnetic medium and wherein the magnetic flux guide conducts magnetic flux from the magnetic medium to and through the paired magnetoresistive head.

Fig. 3

Printed by Rank Xerox (UK) Business Services
2.14.6/3.4

## Description

### FIELD OF THE INVENTION

This invention relates in general to a head for sensing magnetic fields and relates more particularly to a paired magnetoresistive element(PMR) head which is recessed from the head medium interface and which has high permeability flux guides for conducting magnetic flux from the head-medium interface to and through the PMR head.

### BACKGROUND OF THE INVENTION

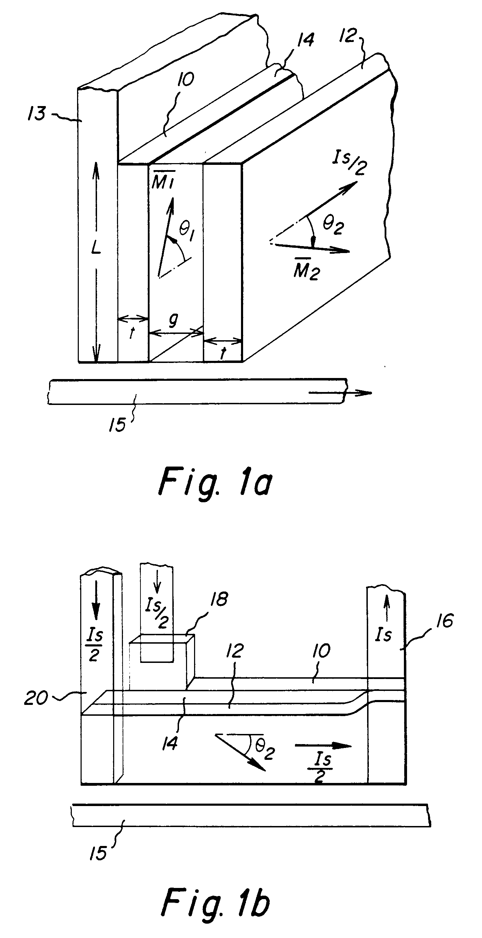

As illustrated in Figures 1a and 1b, a conventional paired magnetoresistive element (PMR) head (such as disclosed in U.S. Patent 3,860,965), includes a matched pair of magnetoresistive (MR) elements 10,12 (e.g., NiFe) deposited side-by-side adjacent to each other on a substrate 13, separated by a thin insulating gap-spacer material 14. The PMR head interfaces with a magnetic medium 15. One end of each MR element 10,12 may be electrically shorted to the other element (Fig. 1b), forming a three-terminal device with one terminal 16 common to both MR elements 10,12 and two other terminals 18,20 at the other ends of elements 10,12 supplied current I/2. For this PMR sensor, the sense currents in elements 10,12 flow in parallel, toward or from the common terminal 16. Such a PMR sensor is self-biased, in that the magnetic fields from the currents in each MR element 10,12 provide a transverse biasing field on the other element. Because the current fields are of equal magnitude but of opposite direction, the polarity of magnetic bias is opposite in the two MR elements 10,12. Thus, their change in resistance in response to a common mode (uniform) signal field is opposite. If the voltage at the two unconnected terminals 18,20 of the PMR sensor is sensed differentially, the individual voltage changes due to fluctuations in the temperature of elements 10,12 will be canceled out by the differential detection. (Since the two MR elements 10,12 are in such close proximity to each other, the temperatures should also be nearly equal.) Such temperature fluctuations can be particularly large for in-contact recording applications (e.g., a tape and/or card reader head), due to discontinuous MR-to-medium heat flow from intermittent head-medium contact, as well as frictional heating from media aspirates scraping the head surface. Even-order nonlinear distortion signals, also being of equal magnitude and polarity in each element 10,12, will also be canceled out when using a differential detection scheme. Hence, in addition to being self-biased, the PMR head has greater linear dynamic range with very much reduced thermal-induced noise in comparison to an MR head using a single MR element for signal field detection.

However, for a PMR head to function, it is necessary that the two MR elements remain electrically insulated from one another everywhere along their trackwidth away from the common terminal. For in-contact recording applications (e.g., a tape head), rubbing of the PMR head against the media may result in smearing of the relatively soft MR material (e.g., NiFe) across the thin insulating gap, thereby creating a short circuit across the PMR elements, rendering such a differentially detected device nonfunctional. Similarly, moisture, debris, and/or electrochemical processes at the head-medium interface may also result in eventual formation of an electrical short across all or part of the active trackwidth of the PMR. Exposing one physical edge of the PMR elements to the external environment at the head-medium interface also risks the possibility of long-term corrosion of the very thin magnetoresistive films which constitute the PMR head. There thus exists a need to solve these problems of known PMR heads.

### SUMMARY OF THE INVENTION

According to the present invention there is provided a solution to the aforementioned problems of the prior art. According to an aspect of the present invention, there is provided a PMR head which is recessed from the head- magnetic medium interface and passivated by surrounding insulating material such that the PMR head is never exposed to the external environment. To prevent excessive spacing loss and degradation of the linear reproduce resolution of the recessed PMR head, high magnetic permeability flux guides are used to conduct flux from the head-medium interface to, and through the PMR elements. The benefits of the PMR head, including increased linearity and rejection of thermal induced noise, are fully retained in the flux-guided PMR head of the present invention.

### DESCRIPTION OF THE DRAWINGS

Figures 1a and 1b are respective partial side and front, perspective views of a conventional PMR head.

Figures 2a and 2b are schematic diagrams of detection schemes for the PMR head of Figures 1a, 1b.

Figures 3 and 4 are respective partial side and front views of one embodiment of the present invention.

### DESCRIPTION OF THE PREFERRED EMBODIMENTS

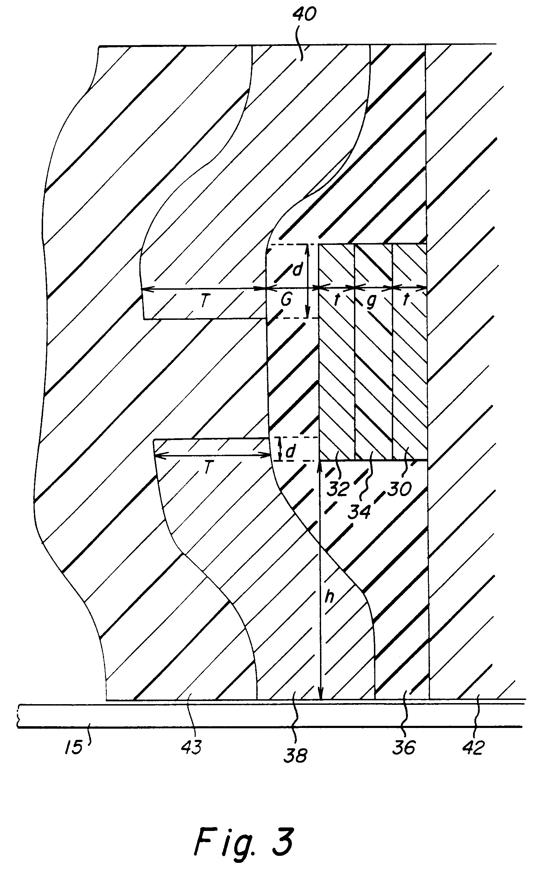

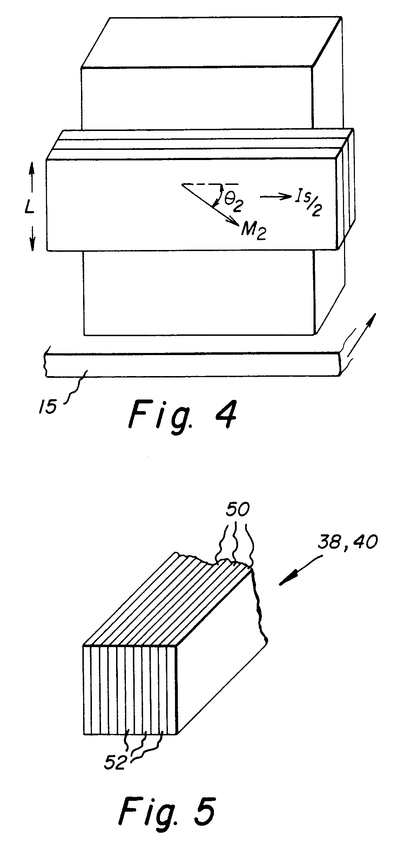

Referring now to Figs. 3 and 4, there is shown an embodiment of the present invention. As shown, a PMR head 28 includes MR elements 30 and 32 separated by insulating spacer 34. MR element 32 is spaced from highly magnetically permeable flux guides 38 and 40 by insulating spacer 36. The entire assemblage is formed on nonmagnetic substrate 42. Passivation layer 43 covers all of the components and protects them from the external environment. Thus, degradation of the thin film MR elements 30,32 due to moisture and corrosion is prevented. PMR head 28 is recessed from magnetic medium 14 by a distance h. MR elements 30,32 have a thickness t and a height L. Spacer 34 has a thickness g and spacer 36 has a thickness G between element 32 and flux guides 38,40. Flux guides 38 and 40 have a thickness T. PMR 28 overlaps flux guides 38,40 by a distance d.

Provided that G > g and d $\leq (B_sGt/4H_k)^{1/2}$ (where $B_s$ is the saturation flux density of MR elements 30,32 and $H_k$ is the induced uniaxial anisotropy field), the bias magnetization distribution of the flux-guided PMR will not be significantly perturbed from that of the conventional PMR. On the other hand, having $d \geq (B_sGt/4H_k)^{1/2}$ insures reasonably good flux coupling between flux guides 38,40 and PMR 28 for maintaining head efficiency. Hence the simple criteria G > g and $d \approx B_sGt/4H_k^{1/2}$ are reasonable design rules for the PMR-flux guide gap G and overlap distance d. The value of gap spaces G and g should usually be chosen as small as practical within the constraints that the fabrication process is robust with respect to maintaining electrical insulation between the MR elements 30,32, as well as between the PMR 28 and the flux guides 38,40. It is also generally best to restrict the overlap distance d such that $d/L \leq 1/4$, in order to avoid excessive flux shunting of the PMR by the flux guides 38,40. Finally, the total magnetic thickness T of the flux guides 38,40 (in particular the lower flux guide 38) should be chosen such that T is less than or equal to one-half the minimum recorded wavelength one desires to reproduce.

As shown in Fig. 5, to reduce or eliminate the possibility of Barkhausen noise from the flux guides 38,40, they may be deposited as laminated films consisting of multiple layers 50 of magnetic material separated by very thin nonmagnetic layers 52.

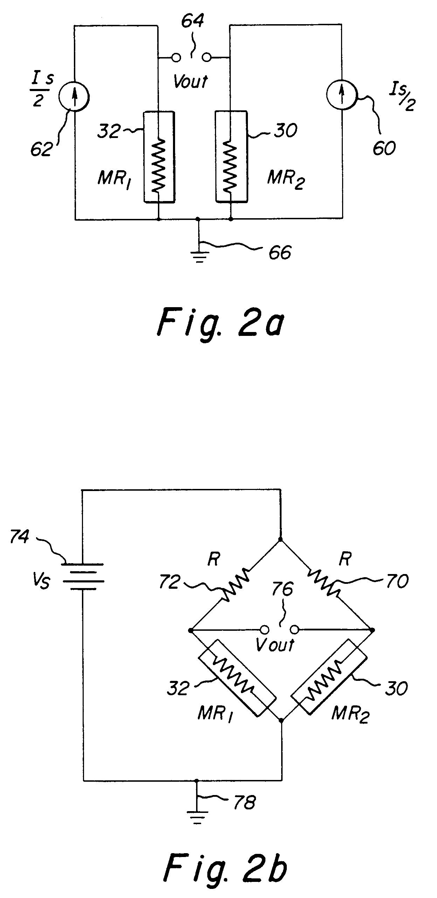

Figures 2a and 2b show simplified electrical circuit diagrams of two basic detection schemes for the PMR 28. As shown in Fig. 2a, MR elements 30,32 are in a matched current source circuit with current sources 60,62 providing current I/2 respectively to MR elements 30,32. One end of elements 30,32 are connected to ground 66, while the other ends of elements 30,32 are connected to Vout terminals 64. Where the MR elements 30,32 are perfectly matched, this circuit gives (in principle) perfect cancellation of thermal induced noise and even order nonlinear distortion (assuming no magnetic saturation of the MR elements).

As shown in Fig. 2b, MR elements 30,32 are in a bridge circuit including matched resistors 70,76. The bridge circuit is connected to DC voltage source ($V_s$) 74 and ground 78. The output of the bridge circuit $V_{out}$ is at terminals 76. This circuit provides cancellation to the first order in the resistance change $\Delta R/R$. However, given the smallness of $\Delta R/R < 2\%$, and the inevitable mismatches in real devices, then bridge detection will suffice for most, if not all, applications.

The embodiment of the invention of Figs. 3,4 is most applicable for in-contact applications involving low to moderate recording densities (e.g., $\leq 10$ kFCI). This embodiment is particularly well suited for low moment magnetic media, due to the high intrinsic sensitivity of MR reproduce heads (independent of head medium velocity), and the insensitivity to thermal-induced noise inherent in the PMR design. To meet the above design criteria with geometries that are practical to fabricate, the PMR element height L will most likely satisfy the condition that $L \geq 4\Delta$, where $\Delta = (B_sgt/4H_k)^{1/2}$. The throat height, h, of the lower flux guide will be determined by either lifetime of the head (accounting for wear), or robustness of both performance and manufacturing of the head with respect to fabrication tolerances in establishing a given nonzero throat height. The linear resolution of the flux-guided PMR head according to the present invention, as measured by the pulse width of the reproduce signal from a single recorded magnetic transition (bit) in the magnetic medium, is limited primarily by the sum h+L, i.e., linear resolution improves as h+L decreases. To a lesser degree, the resolution degrades with increasing height of the upper flux guide, which analogously also plays a lesser role in increasing reproduce sensitivity of the head than does the lower flux guide. Hence, for increased linear resolution without too significant a penalty in reproduce sensitivity, one can employ an alternative embodiment of the present invention of Figs. 3,4, by eliminating the upper flux guide 38.

Although the invention has been described with reference to preferred embodiments thereof, it will be appreciated that variations and modifications can be effected within the spirit and scope of the invention.

**Claims**

1. A magnetoresistive head assembly comprising:

a paired magnetoresistive head including first and second magnetoresistive elements having a first electrically insulating spacer located between said elements;
a magnetic flux guide of a high magnetically permeable material, said magnetic flux guide having a first edge located proximate to a magnetic medium and a second edge spaced from said first edge and said magnetic medium; and
a second electrically insulating spacer located between said second edge of said flux guide and said paired magnetoresistive head;

wherein said paired magnetoresistive head is spaced from said magnetic medium and wherein said magnetic flux guide conducts magnetic flux from said magnetic medium to and through said paired magnetoresistive head.

2. The assembly of claim 1 including another flux guide of high magnetically permeable material which is aligned with and spaced from said flux guide, and which is separated from said paired magnetoresistive head by said second spacer.

3. The assembly of claim 1 wherein said flux guide includes a plurality of alternating layers of magnetic material and nonmagnetic material to minimize Barkhausen noise in said flux guide.

4. The assembly of claim 1 including a layer of insulating material covering said paired magnetoresistive head for protecting said head from the external environment.

5. The assembly of claim 1 wherein said first spacer has a thickness g and said second spacer has a thickness G and wherein G > g.

6. The assembly of claim 1 wherein said head has a height L, wherein said head overlaps said flux guide by a distance d, and wherein d/L is less than or equal to 1/4 to minimize excessive flux shunting of the head by the flux guide.

7. The assembly of claim 1 wherein said magnetic medium has a minimum recorded wavelength, wherein said flux guide has a predetermined thickness, and wherein predetermined thickness is less than or equal to one-half said minimum recorded wavelength.

Fig. 1a

Fig. 1b

**Fig. 2a**

**Fig. 2b**

Fig. 3

*Fig. 4*

*Fig. 5*

European Patent
Office

**EUROPEAN SEARCH REPORT**

Application Number

EP 96 20 3182

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 063 397 A (PHILIPS NV) 27 October 1982 | 1,2 | G11B5/39 |
| A | * page 1, line 29 - page 4, line 20 * <br> * page 5, line 34 - page 6, line 36 * <br> * page 8, line 14 - line 34; figures 1,2,6,7 * | 3 | |
| X | PATENT ABSTRACTS OF JAPAN <br> vol. 010, no. 330 (P-514), 11 November 1986 <br> & JP 61 134912 A (MATSUSHITA ELECTRIC IND CO LTD), 23 June 1986, <br> * abstract * | 1,2 | |
| A | PATENT ABSTRACTS OF JAPAN <br> vol. 011, no. 005 (P-533), 8 January 1987 <br> & JP 61 182620 A (MATSUSHITA ELECTRIC IND CO LTD), 15 August 1986, <br> * abstract; figure 6 * | 1 | |
| A | US 4 896 235 A (TAKINO HIROSHI ET AL) 23 January 1990 <br> * column 3, line 50 - column 5, line 62 * <br> * column 10, line 28 - line 51; figures 1,3,13 * | 1,2,5 | **TECHNICAL FIELDS SEARCHED (Int.Cl.6)** <br> G11B |
| D,A | US 3 860 965 A (VOEGELI OTTO) 14 January 1975 <br> * column 3, line 45 - column 4, line 46; figures 2,4 * | 1 | |
| A | US 4 356 523 A (YEH NAN-HSIUNG) 26 October 1982 <br> * column 1, line 33 - line 44 * <br> * column 4, line 46 - column 5, line 31 * <br> * column 7, line 66 - column 8, line 2; figures 1,2,6 * | 1 | |

-/--

The present search report has been drawn up for all claims

| Place of search | Date of completion of the search | Examiner |
|---|---|---|
| THE HAGUE | 27 February 1997 | Fux, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

## EUROPEAN SEARCH REPORT

**European Patent Office**

Application Number
EP 96 20 3182

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 010, no. 284 (P-501), 26 September 1986 & JP 61 104413 A (MATSUSHITA ELECTRIC IND CO LTD), 22 May 1986, * abstract * | 1 | |
| A | US 4 489 357 A (VAN OOIJEN JOHANNES A C ET AL) 18 December 1984 * column 2, line 21 - line 38 * * column 3, line 33 - line 43 * | 1-3 | |
| A | EP 0 600 549 A (PHILIPS ELECTRONICS NV) 8 June 1994 * column 6, line 56 - column 7, line 11 * * column 9, line 57 - column 10, line 26; figures 1D,5B * | 1,2,4,6 | |
| A | PATENT ABSTRACTS OF JAPAN vol. 95, no. 005 & JP 07 121835 A (MATSUSHITA ELECTRIC IND CO LTD), 12 May 1995, * abstract * | 1,4 | TECHNICAL FIELDS SEARCHED (Int.Cl.6) |
| A | PATENT ABSTRACTS OF JAPAN vol. 010, no. 243 (P-489), 21 August 1986 & JP 61 073220 A (MATSUSHITA ELECTRIC IND CO LTD), 15 April 1986, * abstract * | 1,4 | |
| A | PATENT ABSTRACTS OF JAPAN vol. 010, no. 389 (P-531), 26 December 1986 & JP 61 177616 A (SHARP CORP), 9 August 1986, * abstract * | 1,6 | |

-/--

The present search report has been drawn up for all claims

| Place of search | Date of completion of the search | Examiner |
|---|---|---|
| THE HAGUE | 27 February 1997 | Fux, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent Office | EUROPEAN SEARCH REPORT | Application Number EP 96 20 3182 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 009, no. 207 (P-382), 24 August 1985 & JP 60 069808 A (SHARP KK), 20 April 1985, * abstract * | 1,6 | |
| A | DE 34 38 472 A (MATSUSHITA ELECTRIC IND CO LTD) 15 May 1985 * page 8, line 6 - line 24 * * page 10, line 8 - line 29; figure 1 * | 1,7 | |
| A | EP 0 137 267 A (SONY CORP) 17 April 1985 * page 1, line 1 - line 5 * * page 8, line 30 - page 11, line 26; figure 2 * | 1,7 | |
| A | PATENT ABSTRACTS OF JAPAN vol. 009, no. 040 (P-336), 20 February 1985 & JP 59 180819 A (NEC HOME ELECTRONICS KK), 15 October 1984, * abstract; figures * | 1,7 | TECHNICAL FIELDS SEARCHED (Int.Cl.6) |

The present search report has been drawn up for all claims

| Place of search | Date of completion of the search | Examiner |
|---|---|---|
| THE HAGUE | 27 February 1997 | Fux, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)